# EUROPÄISCHE PATENTSCHRIFT

(11) **EP 2 622 253 B1**
(45) Veröffentlichungstag und Bekanntmachung des Hinweises auf die Patenterteilung: **21.01.2015**
(21) Anmeldenummer: 11764153.0
(22) Anmeldetag: 27.09.2011
(51) Int. Cl.: E04B 1/78, E04B 1/74, E04B 1/76, F16L 59/02

(54) **MIKROPORÖSER, MIT ORGANOSILANEN HYDROPHOBIERTER WÄRMEDÄMMFORMKÖRPER MIT HYDROPHILER OBERFLÄCHE**
MICROPOROUS HEAT-INSULATING MOLDED BODY WHICH IS HYDROPHOBIZED WITH ORGANOSILANES AND WHICH COMPRISES A HYDROPHILIC SURFACE
CORPS MOULÉ CALORIFUGE MICROPOREUX, HYDROPHOBISÉ AVEC DES ORGANOSILANES, À SURFACE HYDROPHILE

(30) Priorität: 27.09.2010 DE 102010046684
(43) Veröffentlichungstag der Anmeldung: 07.08.2013
(73) Patentinhaber: Evonik Degussa GmbH, 45128 Essen (DE)
(72) Erfinder: KRATEL, Günter, 87471 Durach (DE); EYHORN, Thomas, 87452 Altusried (DE); WOHLLEBEN, Peter, A., 74632 Neuenstein (DE); MENZEL, Frank, 63456 Hanau (DE)
(86) Internationale Anmeldenummer: PCT/EP2011/066710
(87) Internationale Veröffentlichungsnummer: WO 2012/041823

(56) Entgegenhaltungen:
- EP-B1- 0 854 892
- DE-U1-202007 013 688

## Beschreibung

Die vorliegende Erfindung betrifft ein Verfahren zur Herstellung eines mikroporösen, mit Organosilanen hydrophobierten Wärmedämmformkörpers mit hydrophiler Oberfläche.

Der Wärmedämmung kommt vor dem Hintergrund steigender Energiekosten und den höheren Anforderungen an Energieeinsparung eine immer höhere Bedeutung zu. Eine neue Generation von Wärmedämmstoffen auf Basis von pyrogenen Kieselsäuren oder Siliciumdioxidaerogelen sind mikroporöse Wärmedämmstoffe. Diese zeichnen sich neben ihrer Nichtbrennbarkeit und ihrer physiologischen Unbedenklichkeit vor allem durch eine hohe Wärmedämmwirkung im Bereich von minus 200°C bis hin zu 1000 °C aus. Generell bestehen mikroporöse Wärmedämmformkörper aus pyrogenen Kieselsäuren oder Siliciumdioxidaerogelen, sowie Trübungsmitteln, armierenden Fasern und gegebenenfalls weiteren Zuschlagstoffen wie zum Beispiel gefällten Kieselsäuren oder Flugaschen. Sie gelten seit Jahrzehnten als Stand der Technik und werden in zahlreichen Anwendungen, unter anderem in Vakuum-Isolations-Paneelen (VIP) erfolgreich eingesetzt.

Nachteile dieser mikroporösen Dämmstoffe sind die geringe, mechanische Stabilität, die eingeschränkten Möglichkeiten der Bearbeitung wie sägen, fräsen, bohren und die staubige Oberfläche. Als Abhilfe werden daher Platten aus diesen Wärmedämmstoffen mit Vliesen, Geweben und oder Aluminiumfolien, Schrumpffolien und/oder keramischen Papieren umgeben. Eine Ausführungsform ist in EP-A- 0 047 494 beschrieben.

Ein weiterer gravierender Nachteil ist dabei jedoch, dass diese Dämmstoffe im Kontakt mit Wasser ihre Struktur und somit ihre Eigenschaften irreversibel verlieren. Auch eine nachträgliche vollständige Trocknung kann den Originalzustand nicht mehr herstellen. Um diesen Nachteil auszugleichen wurden mikroporöse Dämmstoffe und Wärmedämmplatten entwickelt, welche hydrophob sind.

So beschreibt EP-A-1988228 ein Verfahren zur Herstellung durchgängig hydrophobierter Wärmedämmplatten.

Eine weitere Möglichkeit zur Herstellung wasserabweisender Platten ist die nachträgliche Hydrophobierung mittels eines Imprägnats als Hydrophobierungsmittel, wie es im Bautenschutz gehandhabt wird. Hier gilt jedoch, dass nur die äußere Schicht wasserabweisend gestaltet ist.

In einem anderen Verfahren wird eine Wärmedämmstoffmischung, vornehmlich bestehend aus hydrophilen und hydrophoben Kieselsäuren, in Glasgewebesäcke gefüllt, vernäht und zu Platten gepresst. Derartige Platten sind zwar im Kern augenscheinlich wasserabweisend, nehmen aber weiterhin Feuchtigkeit auf. Die entstandenen Platten können, bedingt durch die geringen Zusammenhaltkräfte innerhalb der Platte sowie zwischen der Platte und dem Sackgewebe, nur begrenzt mechanisch bearbeitet werden und sind daher auch bei einfachster Beanspruchung sehr instabil.

Eine Hydrophobierung eines hergestellten mikroporösen Wärmedämmformkörpers mit Organosilanen unter hohem Druck (Autoklaven) ist sehr aufwändig. Außerdem wird bei diesem Verfahren die Struktur des Kernmaterials zum Teil zerstört.

Es liegt nun in der Natur hydrophobierter Oberflächen mikroporöser Platten, dass diese Oberflächen gegenüber allen wasserhaltigen Klebern, Bindern oder Coatings abweisend sind, also eine Verbindung mit wässrigen Systemen nicht eingehen können. Da die Oberflächen von hydrophoben Wärmedämmformkörpern auch weiterhin staubig und mechanisch empfindlich bleiben, müssen diese Flächen für zahlreiche Anwendungen derart behandelt werden, dass zum Einen das Aufbringen weiterer Schichten ermöglicht wird und zum Anderen die mechanischen Eigenschaften, wie zum Beispiel die Flexibilität, verbessert werden.

Die technische Aufgabe der Erfindung war es daher, ein Verfahren zur Herstellung eines mikroporösen, vorwiegend diffusionsoffenen und hydrophoben Wärmedämmformkörpers mit verbesserten mechanischen Eigenschaften bereitzustellen, der es erlaubt, weitere Schichten auf wasserhaltiger Basis dauerhaft aufzubringen.

Gegenstand der Erfindung ist ein Verfahren zur Herstellung eines mikroporösen, mit Organosilanen hydrophobierten Wärmedämmformkörpers, wobei ein hydrophiler Wärmedämmformkörper, dessen Oberfläche
a) teilweise oder vollständig fest mit einer offenporigen, hydrophilen Schicht oder
b) teilweise fest mit einer nicht offenporigen, hydrophilen Schicht oder
c) teilweise fest mit einer offenporigen, hydrophilen Schicht und teilweise fest mit einer nicht offenporigen, hydrophilen Schicht
verklebt ist,
in einer Kammer, in der ein Druck von weniger als Atmosphärendruck herrscht, mit einem oder mehreren dampfförmigen Organosilanen behandelt wird.

Als mikroporöse Wärmedämmformkörper werden bei dem Verfahren solche eingesetzt, die aus Kieselsäuren und oder Siliciumdioxidaerogelen bestehen, wobei die Kieselsäure bevorzugt eine pyrogene Kieselsäure ist. Siliciumdioxid-Aerogele werden durch spezielle Trocknungsverfahren von wässrigen Siliciumdioxidgelen hergestellt. Sie weisen ebenso eine sehr hohe Porenstruktur auf und sind daher hoch wirksame Wärmedämmstoffe. Pyrogene Kieselsäuren werden durch Flammenhydrolyse von flüchtigen Siliciumverbindungen wie organischen und anorganischen Chlorsilanen hergestellt. Bei diesem Verfahren wird ein verdampftes oder gasförmiges, hydrolysierbares Siliciumhalogenid mit einer Flamme zur Reaktion gebracht, die durch Verbrennung von Wasserstoff und eines sauerstoffhaltigen Gases gebildet worden ist. Die Verbrennungsflamme stellt dabei Wasser für die Hydrolyse des Siliciumhalogenids und genügend Wärme zur Hydrolysereaktion zur Verfügung. Eine so hergestellte Kieselsäure wird als pyrogene Kieselsäure bezeichnet. Bei diesem Prozess werden zunächst Primärpartikel gebildet, die nahezu frei von inneren Poren sind. Diese Primärteilchen verschmelzen während des Prozesses über sogenannte "Sinterhälse" zu Aggregaten. Aufgrund dieser Struktur ist pyrogen hergestellte Kieselsäure ein idealer Wärmedämmstoff, da die Aggregatstruktur eine hinreichende mechanische Stabilität bewirkt, die Wärmeübertragung durch Festkörperleitfähigkeit über die "Sinterhälse" minimiert und eine ausreichend hohe Porosität erzeugt.

Die in dem Verfahren eingesetzten mikroporösen Wärmedämmformkörper können weiterhin Trübungsmittel, armierende Fasern und gegebenenfalls weitere feinteilige anorganische Zusatzstoffe wie zum Beispiel gefällte Kieselsäuren oder Flugaschen enthalten.

Die Aufbringung der hydrophilen Schichten (Kaschierung) erfolgt durch wässrige, anorganische Kleber wie Kieselsol oder Wasserglas. Als Kaschiermaterialien für die noch unbehandelten Wärmedämmformkörper sind offenporige Vliese und Gewebe aus der Gruppe der organischen als auch der anorganischen Materialien zu verwenden. Das Flächengewicht liegt zwischen 10 und 200 g/m². Bevorzugt kommen Vliese und Gewebe aus Glas zum Einsatz. Diese Gewebe können auch beschichtet sein. Besonders bevorzugt eignen sich Glasvliese mit einem Flächengewicht von 25 - 80 g/m². Eine teilweise Kaschierung der Oberfläche mit nicht offenporigen Beschichtungen wie metallischen Folien, beispielsweise Aluminiumfolie, oder organischen Folien wird ebenfalls praktiziert. Die Folien können vor oder nach der Kaschierung perforiert und somit offenporig gestaltet werden. Diese Folien können zusätzlich mit beschichtbaren Oberflächen ausgestattet sein.

Das Verfahren wird so ausgeführt, dass ein mikroporöser Wärmedämmformkörper unter Zuhilfenahme von Klebern auf wässriger Basis teilweise oder vollständig, fest mit einer offenporigen und/oder teilweise mit einer nicht offenporigen Schicht kaschiert und getrocknet wird. Anschließend wird er im Unterdruck mit einem oder mehreren dampfförmigen Organosilanen beaufschlagt, wobei der Wärmedämmformkörper durchgängig und nachhaltig hydrophobiert wird. Der Druck in der Kammer ist vor dem Einbringen des Organosilanes kleiner als Atmosphärendruck. Insbesondere ist es günstig, wenn 0,1 mbar < p < Atmosphärendruck ist, wobei p für den Druck in der Kammer vor Einbringen des Organosilanes steht. Besonders bevorzugt ist eine Variante bei der 1 mbar < p < 500 mbar ist. Bei dieser besonderen Ausführungsform erfolgt das Einbringen des Organosilanes also in eine evakuierte Kammer. Bei diesem Unterdruckverfahren wird das Organosilan selbst in die feinsten Poren des hydrophilen Formkörpers "gesaugt" und optimal verteilt. Das Verfahren ist unter anderem dadurch gekennzeichnet, dass das Organosilan unter den in der Kammer vorliegenden Reaktionsbedingungen dampfförmig ist. Das Organosilan selbst kann in flüssiger oder dampfförmiger Form in die Kammer eingebracht werden. In flüssiger Form eingebracht, etwa durch Eindüsen, soll es in der Kammer in den dampfförmigen Zustand übergehen. Bevorzugt wird ein dampfförmiges Organosilan eingebracht.

Als Organosilane kommen folgende Verbindungen zum Einsatz: Verbindungen der Formeln Rₙ-Si-X₄₋ₙ, R₃Si-Y-SiR₃, RₙSiₙOₙ und/oder (CH₃)₃-Si-(O-Si(CH₃)₂)ₙ-OH, sowie HO-Si(CH₃)₂-(O-Si(CH₃)₂)ₙ-OH, wobei n = 1, 2, 3, 4, 5, 6, 7 und 8 sein kann, R= -CH₃ und/oder -H, -C₂H₅, X = -Cl oder -Br, -OCH₃, -OC₂H₅, -OC₃H₇, Y= NH oder O sein kann.

Derartige Verbindungen sind (CH₃)₃SiCl [Trimethylchlorsilan]; ((CH₃)₂SiCl₂ [Dimethyldichlorsilan]; CH₃SiCl₃ [Monomethyltrichlorsilan]; (CH₃)₃SiOC₂H₅ [Trimethylethoxisilan]; (CH₃)₂Si(OC₂H₅)₂ [Dimethyldiethoxisilan]; CH₃Si(OC₂H₅)₃ [Methyltriethoxisilan]; (CH₃)₃SiNHSi(CH₃)₃ [Hexamethyldisilazan]; (CH₃)₃SiOSi(CH₃)₃ [Hexamethyldisiloxan]; (CH₃)₈Si₄O₄ [Octamethyltetracyclosiloxan]; (CH₃)₆Si₃O₃ [Hexamethyltricyclosiloxan]; (CH₃)₃Si(OSi(CH₃)₂)₄OH.

Bevorzugt werden Trimethylchlorsilan, Dimethyldichlorsilan, Hexamethyldisilazan, Octamethyltetracyclosiloxan eingesetzt.

Die Einsatzmengen der siliciumorganischen Verbindungen hängt von der eingesetzten spezifischen Oberfläche (BET-Oberfläche) der Kieselsäuren, deren Anteil an der Mischung, sowie der Art dieser Verbindungen ab.

Der eingesetzte mikroporöse Wärmedämmformkörper wird nach der Zugabe des Organosilanes noch 1 Minute bis 1 Stunde in der Kammer belassen.

Zeitlich zusammen oder im Anschluß an die Zugabe des Organosilanes können zusätzlich Wasser, Alkohole und/oder Wasserstoffhalogenide zugeführt werden. Die Temperatur bei der Behandlung beträgt 20 bis 300 °C.

Obwohl die Behandlung mit Organosilanen von außen auf die beispielsweise Wärmedämmplatte erfolgt und die Silane dabei die offenporige Kaschierung durchdringen müssen, wird die Kaschierung nicht hydrophob. Bei der nicht vollständigen Kaschierung der Platte durch zum Beispiel dichte Alufolien dringt der Dampf lediglich von der offenen Oberfläche in die Dämmplatte ein. In beiden Fällen wird die Verklebung der Kaschierung mit der Platte nicht nachhaltig beeinflusst.

Als Vorteile der mikroporösen Wärmedämmformkörper sind zu nennen: hydrophober Kern mit hydrophiler Oberfläche, geringe Wärmeleitzahlen (0,016 -0,030 W/mK), staubarme Oberfläche, beschichtbare Oberfläche, gute Bearbeitbarkeit (sägen, fräsen, bohren), keine Brennbarkeit.

Auf die mikroporösen, mit Organosilanen hydrophobierten und mit einer hydrophilen Oberflächenschicht versehenen Wärmedämmformkörper können nun als weitere Beschichtung, wässrige Anstriche, Putze, handelsübliche Baukleber, Spachtelmassen, kunststoffvergütete mineralische Kleber, Komponenten von Wärmedämmverbundsystemen für Innen - oder Außendämmung von Gebäuden meist auf Zementbasis oder anderer auf hydraulischer Abbindung beruhender Mechanismen, ebenso wie Silikate, aufgebracht werden. Auch Kunststoffdispersionen oder spezielle Schutzbeschichtungen, sowie Klebebänder können zum Einsatz kommen. Auch kann der Wärmedämmformkörper mit einer oder mehreren Schichten aus Papier, Karton, Metallfolie oder organischen Folien beklebt werden.

Zusätzlich kann der Wärmedämmformkörper mit Bioziden versehen werden, um Algen- und Schimmelbildung zu verhindern.

Einsatzgebiete für die Wärmedämmformkörper sind unter anderem alle Anwendungen bei denen die Dämmmaterialien Feuchtigkeit oder Nässe ausgesetzt sind, bevorzugt ist die Anwendung zur Gebäudeinnen- und-außendämmung, als Bestandteil von Wärmedämmverbundsystemen, im Bereich der technischen Dämmung im Anlagen-, Ofen- und Kühlhausbau, in Haushaltsgeräten wie Kühl- und Tiefkühleinheiten, im Brandschutz und im Transportwesen.

Ausgewählte Anwendungsgebiete sind zum Beispiel Dämmungen in Bauhohlsteinen, bei mehrschaligen Bausteinen, Kerndämmungen für Wärmedämmstoffverbundsysteme (WDVS) für die Innen- und Außendämmung von Gebäuden, Dämmungen bei zweischaligen Mauerwerken, Dämmungen im Ofen- und Anlagenbau in Verbindung mit nassen Baumaterialien, Dämmungen im Anlagen und Apparatebau, Dämmung von Rohrleitungen im Innen- oder Außenbereich, Kerndämmungen für Vakuumisolationsplatten (VIP), Dämmungen in Kühlhäusern, Dämmungen für Haushaltsgeräte und Haushaltskühlgeräte, Dämmungen bei stark basischem Umfeld, Dämmung und/oder Brandschutzsysteme für Transportbehälter oder Brandschutzsysteme für den Innen- und Außenbereich.

### Beispiele

Beispiel 1: Eine mikroporöse Platte 300 x 300 x 25 mm mit der Bezeichnung MICROBIFIRE UL der Firma Bifire S.r.l. aus Nova Milanese, Italien, wird mit einem Glasvlies 30 g/m² mittels eines Klebers aus Kieselsol allseitig kaschiert. Diese Platte wird in eine bei 120°C temperierte Vakuumkammer eingebracht, auf 10 mbar evakuiert und mit Dimethyldichlorsilandampf beaufschlagt. Nach einer Reaktionszeit von 15 Minuten wird die Platte nach einem Spül- und Belüftungsvorgang entnommen. Diese so behandelte Platte ist unterhalb des Glasvlieses vollständig hydrophob, die Oberfläche ist jedoch weiterhin nicht wasserabweisend. Diese Platte wird nun mit handelsüblichem Baukleber beaufschlagt und raumseitig an eine Außenwand geklebt.

Beispiel 2: Eine wie unter Beispiel 1 hergestellte kaschierte Platte wird nach dem Entnehmen aus der Vakuumkammer zusätzlich einseitig mittels eines Wasserglasklebers mit einer Aluminiumfolie kaschiert und anschließend auf der gegenüberliegenden Seite, über die gesamte Länge der Platte, mit zahlreichen parallel verlaufenden Schlitzen mit einer Tiefe von 50% der Plattendicke durch Einsägen versehen. Diese so gewonnene Platte ist in der Längsachse sehr flexibel und kann leicht um eine Rohrleitung gelegt werden, welche sich im Außenbereich befindet und der Witterung ausgesetzt ist.

Beispiel 3: Eine mikroporöse Platte 300 x 300 x 20 mm mit der Bezeichnung WDS Ultra der Firma Porextherm aus Kempten, Deutschland, wird mit einer Aluminiumfolie der Dicke von 25 µm und einem Natronwasserglas beidseitig kaschiert. Diese Platte wird einseitig mit parallel verlaufenden Schlitzen mit einer Tiefe von 50% der Plattendicke durch Einsägen versehen und in eine bei 120°C temperierte Vakuumkammer eingebracht, evakuiert auf 10 mbar und mit Hexamethyldisilazandampf beaufschlagt. Nach einer Reaktionszeit von 15 Minuten wird die Platte nach einem Spül- und Belüftungsvorgang entnommen. Diese so behandelte Platte ist unterhalb der Aluminiumfolie vollständig hydrophob.

## Patentansprüche

1. Verfahren zur Herstellung eines mikroporösen, mit Organosilanen hydrophobierten Wärmedämmformkörpers, **dadurch gekennzeichnet, dass** man einen hydrophilen Wärmedämmformkörper, dessen Oberfläche
a) teilweise oder vollständig fest mit einer offenporigen, hydrophilen Schicht oder
b) teilweise fest mit einer nicht offenporigen, hydrophilen Schicht oder
c) teilweise fest mit einer offenporigen, hydrophilen Schicht und teilweise fest mit einer nicht offenporigen, hydrophilen Schicht
verklebt ist,
in einer Kammer in der ein Druck von weniger als Atmosphärendruck herrscht mit einem oder mehreren dampfförmigen Organosilanen behandelt.

2. Verfahren nach Anspruch 1, **dadurch gekennzeichnet, dass** der hydrophile Wärmedämmformkörper eine Kieselsäure und/oder ein Siliciumdioxidaerogel umfasst oder aus ihnen besteht.

3. Verfahren nach Anspruch 1 oder 2, **dadurch gekennzeichnet, dass** die Kieselsäure eine pyrogene Kieselsäure ist.

4. Verfahren nach den Ansprüchen 1 bis 3, **dadurch gekennzeichnet, dass** der eingesetzte mikroporöse, hydrophile Wärmedämmformkörper weiterhin Trübungsmittel, Fasern und/oder feinteilige anorganische Zusatzstoffe enthält.

5. Verfahren nach den Ansprüchen 1 bis 4, **dadurch gekennzeichnet, dass** die offenporige, hydrophile Schicht ein organisches oder anorganisches Vlies oder Gewebe ist.

6. Verfahren nach den Ansprüchen 1 bis 5, **dadurch gekennzeichnet, dass** die nicht offenporige, hydrophile Schicht eine nicht offenporige Folie ist.

7. Verfahren nach den Ansprüchen 1 bis 6, **dadurch gekennzeichnet, dass** das Organosilan aus der Gruppe bestehend aus Rₙ-Si-X₄₋ₙ R₃Si-Y-SiR₃, RₙSiₙOₙ, (CH₃)₃-Si-(O-Si(CH₃)₂)ₙ-OH, HO-Si(CH₃)₂-(O-Si(CH₃)₂)ₙ-OH, mit n = 1-8; R = -H, -CH₃, -C₂H₅; X= -Cl, -Br; -OCH₃, -OC₂H_{5,} -OC₃H₇, Y= NH, O ausgewählt ist.

8. Verfahren nach den Ansprüchen 1 bis 7, **dadurch gekennzeichnet, dass** das Organosilan in flüssiger oder dampfförmiger Form in die Kammer eingebracht wird.

9. Verfahren nach den Ansprüchen 1 bis 8, **dadurch gekennzeichnet, dass** zeitlich zusammen oder im Anschluss an die Zugabe des Organosilanes Wasser, Alkohole und/oder Wasserstoffhalogenide zugeführt werden.

10. Verfahren nach den Ansprüchen 1 bis 9, **dadurch gekennzeichnet, dass** die Temperatur in der Kammer 20 bis 300°C ist.

11. Verfahren nach den Ansprüchen 1 bis 10, **dadurch gekennzeichnet, dass** man den eingesetzten mikroporösen Wärmedämmformkörper vom Zeitpunkt an, an dem das Organosilan zugegeben wird noch 1 Minute bis 1 Stunde in der Kammer belässt.

12. Verfahren nach den Ansprüchen 1 bis 11, **dadurch gekennzeichnet, dass** als Kleber Kiesesole und/oder Wasserglas eingesetzt werden.

## Claims

1. Process for producing a microporous, heat-insulating moulded body which has been hydrophobicized with organosilanes, **characterized in that** a hydrophilic heat-insulating moulded body whose surface
a) has been partly or fully firmly bonded to an open-pored, hydrophilic layer or
b) has been partly firmly adhesively bonded to a hydrophilic layer which is not open-pored or
c) has been partly firmly adhesively bonded to an open-pored, hydrophilic layer and partly firmly adhesively bonded to a hydrophilic layer which is not open-pored
is treated with one or more gaseous organosilanes in a chamber in which a pressure of less than atmospheric pressure prevails.

2. Process according to Claim 1, **characterized in that** the hydrophilic heat-insulating moulded body comprises or consists of a silica and/or a silicon dioxide aerogel.

3. Process according to Claim 1 or 2, **characterized in that** the silica is a pyrogenic silica.

4. Process according to any of Claims 1 to 3, **characterized in that** the microporous, hydrophilic heat-insulating moulded body used additionally contains opacifiers, fibres and/or finely divided inorganic additives.

5. Process according to any of Claims 1 to 4, **characterized in that** the open-pored, hydrophilic layer is an organic or inorganic nonwoven or woven fabric.

6. Process according to any of Claims 1 to 5, **characterized in that** the hydrophilic layer which is not open-pored is a film which is not open-pored.

7. Process according to any of Claims 1 to 6, **characterized in that** the organosilane is selected from the group consisting of Rₙ-Si-X₄₋ₙ, R₃Si-Y-SiR₃, RₙSiₙOₙ, (CH₃)₃-Si-(O-Si(CH₃)₂)ₙ-OH, HO-Si(CH₃)₂-(O-Si(CH₃)₂)ₙ-OH, with n = 1-8; R = -H, -CH₃, -C₂H₅; X = -Cl, -Br; -OCH₃, -OC₂H₅, -OC₃H₇, Y = NH, O.

8. Process according to any of Claims 1 to 7, **characterized in that** the organosilane is introduced in liquid or gaseous form into the chamber.

9. Process according to any of Claims 1 to 8, **characterized in that** water, alcohols and/or hydrogen halides are fed in simultaneously with or subsequent to the addition of the organosilane.

10. Process according to any of Claims 1 to 9, **characterized in that** the temperature in the chamber is from 20 to 300°C.

11. Process according to any of Claims 1 to 10, **characterized in that** the microporous heat-insulating moulded body used is left in the chamber for a further 1 minute to 1 hour from the point in time at which the organosilane is added.

12. Process according to any of Claims 1 to 11, **characterized in that** silica sols and/or water glass are used as adhesive.

## Revendications

1. Procédé pour la préparation d'un corps façonné d'isolation thermique microporeux, hydrofugé par des organosilanes, **caractérisé en ce qu'**on traite un corps façonné d'isolation thermique hydrophile, dont la surface est collée
a) partiellement ou totalement, de manière fixe, avec une couche hydrophile à pores ouverts ou
b) partiellement, de manière fixe, avec une couche hydrophile non à pores ouverts ou
c) partiellement, de manière fixe, avec une couche hydrophile à pores ouverts et partiellement, de manière fixe, avec une couche hydrophile non à pores ouverts
dans une chambre dans laquelle il règne une pression inférieure à la pression atmosphérique, avec un ou plusieurs organosilanes sous forme de vapeur.

2. Procédé selon la revendication 1, **caractérisé en ce que** le corps façonné d'isolation thermique hydrophile comprend une silice et/ou un aérogel de dioxyde de silicium ou est constitué par ceux-ci.

3. Procédé selon la revendication 1 ou 2, **caractérisé en ce que** la silice est une silice pyrogène.

4. Procédé selon les revendications 1 à 3, **caractérisé en ce que** le corps façonné d'isolation thermique hydrophile, microporeux utilisé contient en outre des opacifiants, des fibres et/ou des additifs inorganiques finement divisés.

5. Procédé selon les revendications 1 à 4, **caractérisé en ce que** la couche hydrophile à pores ouverts est un non-tissé ou un tissu organique ou inorganique.

6. Procédé selon les revendications 1 à 5, **caractérisé en ce que** la couche hydrophile non à pores ouverts est une feuille non à pores ouverts.

7. Procédé selon les revendications 1 à 6, **caractérisé en ce que** l'organosilane est choisi dans le groupe constitué par Rₙ-Si-X₄_ₙ, R₃Si-Y-SiR₃, RₙSiₙOₙ, (CH₃)₃-Si-(O-Si(CH₃)₂)ₙ-OH, HO-Si(CH₃)₂-(O-Si(CH₃)₂)ₙ-OH, avec n = 1-8 ; R = -H, -CH₃, -C₂H₅ ; X = -Cl, -Br ;-OCH₃, -OC₂H₅, -OC₃H₇, Y = NH, O.

8. Procédé selon les revendications 1 à 7, **caractérisé en ce que** l'organosilane est introduit dans la chambre sous forme liquide ou sous forme de vapeur.

9. Procédé selon les revendications 1 à 8, **caractérisé en ce qu'**on introduit simultanément ou consécutivement, dans le temps, à l'addition de l'organosilane, de l'eau, des alcools et/ou des halogénures d'hydrogène.

10. Procédé selon les revendications 1 à 9, **caractérisé en ce que** la température dans la chambre est de 20 à 300°C.

11. Procédé selon les revendications 1 à 10, **caractérisé en ce qu'**on laisse le corps façonné d'isolation thermique microporeux utilisé, à partir du moment où l'organosilane est ajouté, encore pendant 1 minute à 1 heure dans la chambre.

12. Procédé selon les revendications 1 à 11, **caractérisé en ce qu'**on utilise comme colle des sols de silice et/ou du verre soluble.
